# EUROPEAN PATENT APPLICATION

(11) **EP 3 929 225 A1**
(43) Date of publication of application: **29.12.2021**
(21) Application number: 20758819.5
(22) Date of filing: 18.02.2020
(51) Int. Cl.: C08F 290/06, G02B 6/44, C08K 3/22

(54) **RESIN COMPOSITION FOR COVERING OPTICAL FIBER**

(30) Priority: 18.02.2019 JP 2019026611
(71) Applicant: SUMITOMO ELECTRIC INDUSTRIES, LTD., Osaka-shi, Osaka 541-0041 (JP)
(72) Inventor: HAMAKUBO, Katsushi, Osaka-shi, Osaka 541-0041 (JP); SOHMA, Kazuyuki, Osaka-shi, Osaka 541-0041 (JP); TOKUDA, Kazuya, Osaka-shi, Osaka 541-0041 (JP); KONISHI, Tatsuya, Osaka-shi, Osaka 541-0041 (JP)
(74) Representative: Hoffmann Eitle
(86) International application number: PCT/JP2020/006349
(87) International publication number: WO 2020/171083

(57) **Abstract**

The present disclosure relates to a resin composition for optical fiber coating, the resin composition including a base resin containing a urethane (meth)acrylate oligomer, a monomer, and a photopolymerization initiator; and inorganic oxide particles, in which a volume average particle size of the inorganic oxide particles as measured by a small angle X-ray scattering method is 800 nm or less, and a standardized dispersion of the volume average particle size is 60% or less.

## Description

### Technical Field

The present disclosure relates to a resin composition for optical fiber coating. The present application claims priority on the basis of Japanese Patent Application No. 2019-026611, filed on February 18, 2019, the entire disclosure described in the Japanese Patent Application being incorporated herein by reference.

### Background Art

Generally, an optical fiber has a coating resin layer for protecting a glass fiber, which is an optical transmission body. An optical fiber is required to have excellent lateral pressure characteristics in order to reduce an increase in the transmission loss that is induced by minute bending occurring when lateral pressure is applied on the optical fiber.

For example, in Patent Literature 1, it has been investigated to improve the lateral pressure characteristics of an optical fiber by forming a resin layer using an ultraviolet-curable resin composition containing a filler that contains synthetic quartz as a raw material.

### Citation List

### Patent Literature

Patent Literature 1: Japanese Unexamined Patent Publication No. 2014-219550

### Summary of Invention

A resin composition for optical fiber coating according to an aspect of the present disclosure is a resin composition that includes a base resin containing a urethane (meth)acrylate oligomer, a monomer, and a photopolymerization initiator; and inorganic oxide particles, in which a volume average particle size of the inorganic oxide particles as measured by a small angle X-ray scattering method is 800 nm or less, and a standardized dispersion of the volume average particle size is 60% or less.

### Brief Description of Drawings

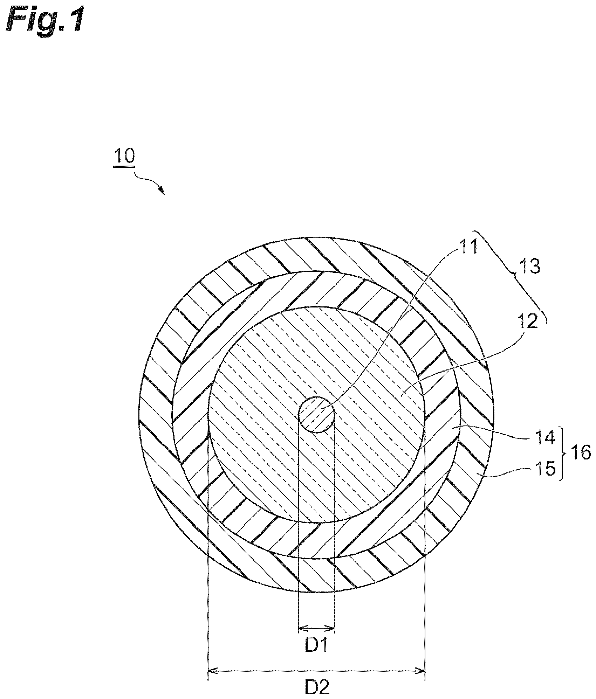

FIG. 1 is an outline cross-sectional view illustrating an example of an optical fiber formed using a resin composition according to the present embodiment.

### Description of Embodiments

### [Problem to be solved by invention]

A coating resin layer generally comprises a primary resin layer and a secondary resin layer. The resin composition that forms a secondary resin layer is required to enhance the lateral pressure characteristics of an optical fiber by increasing Young's modulus. However, when the content of a filler is increased, Young's modulus of the resin layer to be formed can be increased high; however, coatability becomes insufficient, and the resin layer tends to become brittle.

An object of the present disclosure is to provide a resin composition for optical fiber coating, the resin composition being capable of realizing high Young's modulus, which is required from a secondary resin layer, and also having excellent coatability.

### [Description of embodiments of present disclosure]

First, embodiments of the present disclosure will be described by listing the contents of the embodiments. A resin composition for optical fiber coating according to an aspect of the present disclosure is a resin composition including a base resin containing a urethane (meth)acrylate oligomer, a monomer, and a photopolymerization initiator; and inorganic oxide particles, in which a volume average particle size of the inorganic oxide particles as measured by a small angle X-ray scattering method is 800 nm or less, and a standardized dispersion of the volume average particle size is 60% or less.

Such a resin composition can realize high Young's modulus that is required from a secondary resin layer, and also has excellent coatability. Particularly, since the dispersed state of the inorganic oxide particles is satisfactory, excellent coatability is maintained, and deterioration of productivity caused by short circuit or the like can be suppressed.

The inorganic oxide particles may be particles including at least one selected from the group consisting of silicon dioxide, zirconium dioxide, aluminum oxide, magnesium oxide, titanium oxide, tin oxide, and zinc oxide. Thereby, excellent Young's modulus is likely to be exhibited.

The content of the inorganic oxide particles may be from 5% by mass to 60% by mass based on the total amount of the resin composition. Thereby, excellent Young's modulus is likely to be exhibited, and excellent coatability is likely to be maintained.

The inorganic oxide particles may be hydrophobic. Thereby, excellent coatability is likely to be exhibited.

The viscosity at 45°C of the resin composition may be 3,500 mPa·s or less. Thereby, excellent coatability is likely to be exhibited.

### [Details of embodiments of present disclosure]

A specific example of the resin composition according to an embodiment of the present disclosure will be described, with reference to the drawings as necessary. Meanwhile, the present disclosure is not limited to these examples, and it is intended that meanings that are disclosed in the claims and are equivalent to the claims, and all modifications made within the scope are included. In the following description, the same symbol will be assigned to identical elements in the description of the drawings, and any overlapping descriptions will not be repeated.

### <Resin composition for optical fiber coating>

The resin composition for optical fiber coating (hereinafter, also simply referred to as "resin composition") according to the present embodiment includes a base resin containing a urethane (meth)acrylate oligomer, a monomer, and a photopolymerization initiator; and inorganic oxide particles.

Here, the term (meth)acrylate means acrylate, or methacrylate corresponding thereto. The same also applies to (meth)acrylic acid.

### (Inorganic oxide particles)

The inorganic oxide particles are not particularly limited; however, for example, from the viewpoint that the dispersibility in the resin composition is excellent, and a smooth resin layer is easily formed, it is preferable that the inorganic oxide particles are particles including at least one selected from the group consisting of silicon dioxide (silica), zirconium dioxide (zirconia), aluminum oxide (alumina), magnesium oxide (magnesia), titanium oxide (titania), tin oxide, and zinc oxide. From the viewpoints of being inexpensive, being easily subjected to surface treatment, having ultraviolet transmissibility, and easily imparting appropriate hardness to the resin layer, it is more preferable to use silica particles as the inorganic oxide particles according to the present embodiment.

A surface of the inorganic oxide particles may be treated with an organic compound having a predetermined functional group. That is, the inorganic oxide particles may be particles having a predetermined functional group introduced onto the surface (surface-modified inorganic oxide particles). Furthermore, as a result, the inorganic oxide particles may be hydrophobic particles. Examples of the functional group include an acryloyl group, a methacryloyl group, and a vinyl group. These functional groups have ultraviolet-curability. By having such a functional group, the standardized dispersion of the volume average particle size can be suppressed, and a resin layer having high Young's modulus is likely to be formed.

Examples of the organic compound having an ultraviolet-curable functional group include silane compounds such as 3 -methacryloxypropyltrimethoxysilane, 3 -acryloxypropyltrimethoxysilane, 3-methacryloxypropyltriethoxysilane, 3-acryloxypropyltriethoxysilane, 8-methacryloxyoctyltrimethoxysilane, 8-acryloxyoctyltrimethoxysilane, 7-octenyltrimethoxysilane, vinyltrimethoxysilane, and vinyltriethoxysilane.

Regarding the inorganic oxide particles, particles in a state of being dispersed in a dispersing medium can be used. By using inorganic oxide particles in a state of being dispersed in a dispersing medium, the inorganic oxide particles can be uniformly dispersed in the resin composition, and the storage stability of the resin composition can be enhanced. Furthermore, the standardized dispersion of the volume average particle size can be suppressed. The dispersing medium is not particularly limited as long as the dispersing medium does not inhibit curing of the resin composition. The dispersing medium may be reactive or non-reactive.

As a reactive dispersing medium, a monomer such as a (meth)acryloyl compound or an epoxy compound may be used. Examples of the (meth)acryloyl compound include 1,6-hexanediol di(meth)acrylate, EO-modified bisphenol A di(meth)acrylate, polyethylene glycol di(meth)acrylate, PO-modified bisphenol A di(meth)acrylate, polypropylene glycol di(meth)acrylate, polytetramethylene glycol di(meth)acrylate, 2-hydroxy-3-phenoxypropyl acrylate, a (meth)acrylic acid adduct of propylene glycol diglycidyl ether, a (meth)acrylic acid adduct of tripropylene glycol diglycidyl ether, and a (meth)acrylic acid adduct of glycerin diglycidyl ether. As the dispersing medium, the (meth)acryloyl compound mentioned as an example of the monomer that will be described below may also be used.

As a non-reactive dispersing medium, a ketone-based solvent such as methyl ethyl ketone (MEK), an alcohol-based solvent such as methanol (MeOH) or propylene glycol monomethyl ether (PGME), or an ester-based solvent such as propylene glycol monomethyl ether acetate (PGMEA) may be used. In the case of the non-reactive dispersing medium, the resin composition may be prepared by mixing a base resin with inorganic oxide particles dispersed in a dispersing medium, and then removing a portion of the dispersing medium.

In a case in which the resin composition is analyzed by a small angle X-ray scattering method, the volume average particle size of the inorganic oxide particles as measured by a small angle X-ray scattering method is 800 nm or less. Thereby, the dispersibility in the resin composition can be maintained satisfactorily, and excellent coatability can be imparted to the resin composition. Furthermore, high Young's modulus is likely to be maintained in the resulting resin layer. From this point of view, the volume average particle size may be 750 nm or less, may be 500 nm or less, may be 300 nm or less, may be 150 nm or less, may be 75 nm or less, or may be 20 nm or less. The lower limit of the volume average particle size is not particularly limited; however, from the viewpoint of dispersion stability, the volume average particle size can be adjusted to 5 nm.

Furthermore, the standardized dispersion of the above-described volume average particle size is 60% or less. Since aggregation of the inorganic oxide particles in the resin composition is suppressed, excellent coatability can be imparted to the resin composition. Furthermore, high Young's modulus is likely to be maintained in the resulting resin layer. From this point of view, the standardized dispersion of the volume average particle size may be 55% or less, may be 45% or less, may be 35% or less, may be 20% or less, or may be 10% or less. The lower limit of the standardized dispersion is not particularly limited; however, from the viewpoint that the inorganic oxide particles are efficiently charged into the resin, the standardized dispersion can be adjusted to 5%.

The volume average particle size of the inorganic oxide particles in the resin composition and the standardized dispersion of the volume average particle size can be varied by adjusting the average particle size of the inorganic oxide particles to be used as a raw material, the particle size distribution of this particle size, and the surface state of the inorganic oxide particles (the amount of hydroxyl groups at the surface, the type of the functional group, or the like).

The small angle X-ray scattering method is a technique of analyzing the X-ray scattering intensity obtainable at a scattering angle of 5° or less and quantitatively determining the shape, distribution, and the like of the scattered bodies. The volume average particle size and the standardized dispersion representing the fluctuation of the particle size can be determined from an X-ray scattering intensity profile. That is, the volume average particle size and the standardized dispersion thereof can be determined by performing fitting according to a non-linear least square method such that the X-ray scattering intensity thus measured, and the X-ray scattering intensity calculated from a theoretical formula represented by a function of the particle size and the particle size distribution approach to each other.

It is known to determine the particle size distribution of minute scattered bodies by analyzing such an X-ray scattering intensity profile, and regarding the analysis method, for example, known analysis methods published by Schmidt and colleagues, for example, the method described in I.S. Fedorova and P. Schmidt: J. Appl. Cryst., 11, 405, 1978, can be used.

The content of the inorganic oxide particles is preferably from 5% by mass to 60% by mass based on the total amount of the resin composition (total amount of the base resin and the inorganic oxide particles); however, the content may be from 5% by mass to 50% by mass, or may be from 10% by mass to 40% by mass. When the content of the inorganic oxide particles is 5% by mass or more, a resin layer having excellent lateral pressure characteristics (having excellent Young's modulus) is likely to be formed. When the content of the inorganic oxide particles is 60% by mass or less, the coatability of the resin composition is easily enhanced, and a tough resin layer can be formed.

### (Base resin)

A base resin according to the present embodiment contains a urethane (meth)acrylate oligomer, a monomer, and a photopolymerization initiator.

Regarding the urethane (meth)acrylate oligomer, an oligomer obtainable by reacting a polyol compound, a polyisocyanate compound, and a hydroxyl group-containing (meth)acrylate compound can be used.

Examples of the polyol compound include polytetramethylene glycol, polypropylene glycol, and bisphenol A ethylene oxide-added diol. Examples of the polyisocyanate compound include 2,4-tolylene diisocyanate, 2,6-tolylene diisocyanate, isophorone diisocyanate, and dicyclohexylmethane 4,4'-diisocyanate. Examples of the hydroxyl group-containing (meth)acrylate compound include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate, and tripropylene glycol di(meth)acrylate.

From the viewpoint of adjusting Young's modulus of the resin layer, the number average molecular weight of the polyol compound may be from 300 to 3,000.

As a catalyst used at the time of synthesizing a urethane (meth)acrylate oligomer, an organotin compound is generally used. Examples of the organotin compound include dibutyltin dilaurate, dibutyltin diacetate, dibutyltin malate, dibutyltin bis(2-ethylhexyl mercaptoacetate), dibutyltin bis(isooctyl mercaptoacetate), and dibutyltin oxide. From the viewpoint of easy availability or the catalyst performance, it is preferable to use dibutyltin dilaurate or dibutyltin diacetate as the catalyst.

At the time of synthesizing the urethane (meth)acrylate oligomer, a lower alcohol having 5 or fewer carbon atoms may be used. Examples of the lower alcohol include methanol, ethanol, 1-propanol, 2-propanol, 1-butanol, 2-butanol, 2-methyl-2-propanol, 1-pentanol, 2-pentanol, 3-pentanol, 2-methy-1-butanol, 3-methyl-1-butanol, 2-methyl-2-butanol, 3-methyl-2-butanol, and 2,2-dimethyl-1-propanol.

The resin composition according to the present embodiment may further contain an epoxy (meth)acrylate oligomer. Regarding the epoxy (meth)acrylate oligomer, an oligomer obtainable by reacting an epoxy resin having two or more glycidyl groups with a compound having a (meth)acryloyl group can be used.

As the monomer, a monofunctional monomer having one polymerizable group or a polyfunctional monomer having two or more polymerizable groups can be used. Regarding the monomer, two or more kinds may be used as a mixture.

Examples of the monofunctional monomer include (meth)acrylate-based monomers such as methyl (meth)acrylate, ethyl (meth)acrylate, propyl (meth)acrylate, n-butyl (meth)acrylate, s-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 2-phenoxyethyl (meth)acrylate, 3-phenoxybenzyl acrylate, phenoxy diethylene glycol acrylate, phenoxy polyethylene glycol acrylate, 4-tert-butyl cyclohexanol acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxy polyethylene glycol (meth)acrylate, and isobornyl (meth)acrylate; carboxyl group-containing monomers such as (meth)acrylic acid, a (meth)acrylic acid dimer, carboxyethyl (meth)acrylate, carboxypentyl (meth)acrylate, and ω-carboxy-polycaprolactone (meth)acrylate; heterocyclic ring-containing (meth)acrylates such as N-acryloylmorpholine, N-vinylpyrrolidone, N-vinylcaprolactam, N-acryloylpiperidine, N-methacryloylpiperidine, N-acryloylpyrrolidine, 3-(3-pyridine)propyl (meth)acrylate, and cyclic trimethylolpropane formal acrylate; maleimide-based monomers such as maleimide, N-cyclohexylmaleimide, and N-phenylmaleimide; N-substituted amide-based monomers such as (meth)acrylamide, N,N-dimethyl (meth)acrylamide, N,N-diethyl (meth)acrylamide, N-hexyl (meth)acrylamide, N-methyl (meth)acrylamide, N-butyl (meth)acrylamide, N-butyl (meth)acrylamide, N-methylol (meth)acrylamide, and N-methylolpropane (meth)acrylamide; aminoalkyl (meth)acrylate-based monomers such as aminoethyl (meth)acrylate, aminopropyl (meth)acrylate, N,N-dimethylaminoethyl (meth)acrylate, and tert-butylaminoethyl (meth)acrylate; and succinimide-based monomers such as N-(meth)acryloyloxymethylene succinimide, N-(meth)acryloyl-6-oxyhexamethylene succinimide, and N-(meth)acryloyl-8-oxyoctamethylene succinimide.

Examples of the polyfunctional monomer include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, di(meth)acrylate of an alkylene oxide adduct of bisphenol A, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyldiol di(meth)acrylate, 3-ethyl-1,8-octanediol di(meth)acrylate, di(meth)acrylate of an EO-adduct of bisphenol A, trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl] isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl]isocyanurate.

The photopolymerization initiator can be appropriately selected from known radical photopolymerization initiators and used. Examples of the photopolymerization initiator include 1-hydroxycyclohexyl phenyl ketone (Omnirad 184, manufactured by IGM Resins), 2,2-dimethoxy-2-phenylacetophenone, 1-(4-isopropylphenyl)-2-hydroxy-2-methylpropan-1-one, bis(2,6-dimethoxybenzoyl)-2,4,4-trimethylpentylphosphine oxide, 2-methyl-1-[4-(methylthio)phenyl]-2-morpholinopropan-1-one (Omnirad 907, manufactured by IGM Resins), 2,4,6-trimethylbenzoyldiphenylphosphine oxide (Omnirad TPO, manufactured by IGM Resins), and bis(2,4,6-trimethylbenzoyl)phenylphosphine oxide (Omnirad 819, manufactured by IGM Resins).

The resin composition may further contain a silane coupling agent, a leveling agent, an anti-foaming agent, an oxidation inhibitor, a sensitizer, and the like.

The silane coupling agent is not particularly limited as long as it does not impede curing of the resin composition. Examples of the silane coupling agent include tetramethyl silicate, tetraethyl silicate, mercaptopropyltrimethoxysilane, vinyltrichlorosilane, vinyltriethoxysilane, vinyltris(P-methoxy-ethoxy)silane, β-(3,4-epoxycyclohexyl)-ethyltrimethoxysilane, dimethoxydimethylsilane, diethoxydimethylsilane, 3-acryloxypropyltrimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-γ-aminopropyltrimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl)propyl] tetrasulfide, bis-[3-(triethoxysilyl)propyl] disulfide, γ-trimethoxysilylpropyldimethylthiocarbamyl tetrasulfide, and γ-trimethoxysilylpropylbenzothiazyl tetrasulfide.

The viscosity of the resin composition according to the present embodiment is preferably 3,500 mPa·s or less, more preferably 2,000 mPa·s or less, and even more preferably 1,500 mPa·s or less, at 45°C. When the viscosity of the resin composition is in the above-described range, the coatability of the resin composition can be enhanced. Meanwhile, the lower limit of the viscosity is not particularly limited; however, from the viewpoint of the wettability to a primary resin layer, the viscosity can be adjusted to 300 mPa·s.

The resin composition according to the present embodiment can be suitably used as a secondary coating material for an optical fiber. By using the resin composition according to the present embodiment in a secondary resin layer, an optical fiber having high Young's modulus and excellent lateral pressure characteristics can be produced.

### <Optical fiber>

FIG. 1 is an outline cross-sectional view illustrating an example of an optical fiber formed using the resin composition according to the present embodiment. An optical fiber 10 includes a glass fiber 13 including a core 11 and a clad 12; and a coating resin layer 16 provided on the outer periphery of the glass fiber 13, the coating resin layer 16 including a primary resin layer 14 and a secondary resin layer 15.

The clad 12 surrounds the core 11. The core 11 and the clad 12 mainly include glass such as quartz glass, and for example, in the core 11, germanium-added quartz can be used, while in the clad 12, pure quartz or fluorine-added quartz can be used.

In FIG. 1, for example, the outer diameter (D2) of the glass fiber 13 is about 125 µm, and the diameter (D1) of the core 11 that constitutes the glass fiber 13 is about from 7 µm to 15 µm.

The thickness of the coating resin layer 16 is usually about from 60 µm to 70 µm. The thicknesses of the respective layers of the primary resin layer 14 and the secondary resin layer 15 may be about from 10 µm to 50 µm, and for example, the thickness of the primary resin layer 14 may be 35 µm, while the thickness of the secondary resin layer 15 may be 25 µm. The outer diameter of the optical fiber 10 may be about from 245 µm to 265 µm.

As described above, the resin composition according to the present embodiment can be used at the time of forming a secondary resin layer. The secondary resin layer can be formed by curing a resin composition that includes the above-described base resin and inorganic oxide particles. Thereby, the lateral pressure characteristics of an optical fiber can be enhanced.

The Young's modulus of the secondary resin layer is preferably 1,300 MPa or higher, more preferably from 1,300 MPa to 2,600 MPa, and even more preferably from 1,300 MPa to 2,500 MPa, at 23°C. When the Young's modulus of the secondary resin layer is 1,300 MPa or higher, the lateral pressure characteristics are easily enhanced, and when the Young's modulus is 2,600 MPa or lower, since appropriate toughness can be imparted to the secondary resin layer, cracking and the like are not easily generated in the secondary resin layer.

The inorganic oxide particles dispersed in the dispersing medium exist in a state of being dispersed in the resin layer even after curing of the resin layer. In the case of using a reactive dispersing medium, the inorganic oxide particles are mixed into the resin composition together with the dispersing medium, and the inorganic oxide particles are incorporated into the resin layer while the dispersed state is maintained. In the case of using a non-reactive dispersing medium, the dispersing medium is such that at least a portion thereof is volatilized from the resin composition and disappears; however, the inorganic oxide particles remain in the resin composition while in a dispersed state and exist in a state of being dispersed in the resin layer after curing. The inorganic oxide particles present in the resin layer are such that when observed with an electron microscope, the inorganic oxide particles are observed in a state in which primary particles are dispersed.

The primary resin layer 14 can be formed by, for example, curing a resin composition including a urethane (meth)acrylate oligomer, a monomer, a photopolymerization initiator, and a silane coupling agent. The resin composition for a primary resin layer can use a conventionally known technology. The urethane (meth)acrylate oligomer, the monomer, the photopolymerization initiator, and the silane coupling agent may be appropriately selected from the compounds mentioned as examples for the base resin. However, the resin composition that forms a primary resin layer has a composition that is different from the base resin that forms a secondary resin layer.

### Examples

Hereinafter, the results of evaluation tests obtained using Examples and Comparative Examples according to the present disclosure will be presented, and the present disclosure will be described in more detail. Meanwhile, the present disclosure is not limited to these Examples.

### [Production of resin composition]

### (Oligomer)

As oligomers, a urethane acrylate oligomer (UA) obtained by reacting a polypropylene glycol having a molecular weight of 600, 2,4-tolylene diisocyanate, and hydroxyethyl acrylate, and an epoxy acrylate oligomer (EA) were prepared.

### (Monomer)

As monomers, isobornyl acrylate (trade name "IBXA" of OSAKA ORGANIC CHEMICAL INDUSTRY LTD.), tripropylene glycol diacrylate (trade name "TPGDA" of DAICEL-ALLNEX LTD.), and 2-phenoxyethyl acrylate (trade name "LIGHT ACRYLATE PO-A" of Kyoeisha Chemical Co., Ltd.) were prepared.

### (Photopolymerization initiator)

As photopolymerization initiators, 1-hydroxycyclohexyl phenyl ketone and 2,4,6-trimethylbenzoyl diphenylphosphine oxide were prepared.

### (Base resin)

Various raw materials were mixed such that the contents in the composition would be the proportions indicated in Table 1, and thereby base resins were prepared.

### (Inorganic oxide particles)

As inorganic oxide particles, silica sols (MEK dispersion liquids) including the following silica particles were prepared. For hydrophobic silica particles, a plurality of kinds having different particle sizes was prepared. Meanwhile, the particle size of the silica particles used as a raw material is a value converted from the BET specific surface area.

Hydrophobic silica particles: silica particles that have been surface-treated using a silane coupling agent.

### (Preparation of resin composition)

A base resin and a silica sol were mixed, subsequently most of MEK was removed, and thereby a resin composition in which the content of silica particles in the resin composition had the value indicated in Table 1 was prepared.

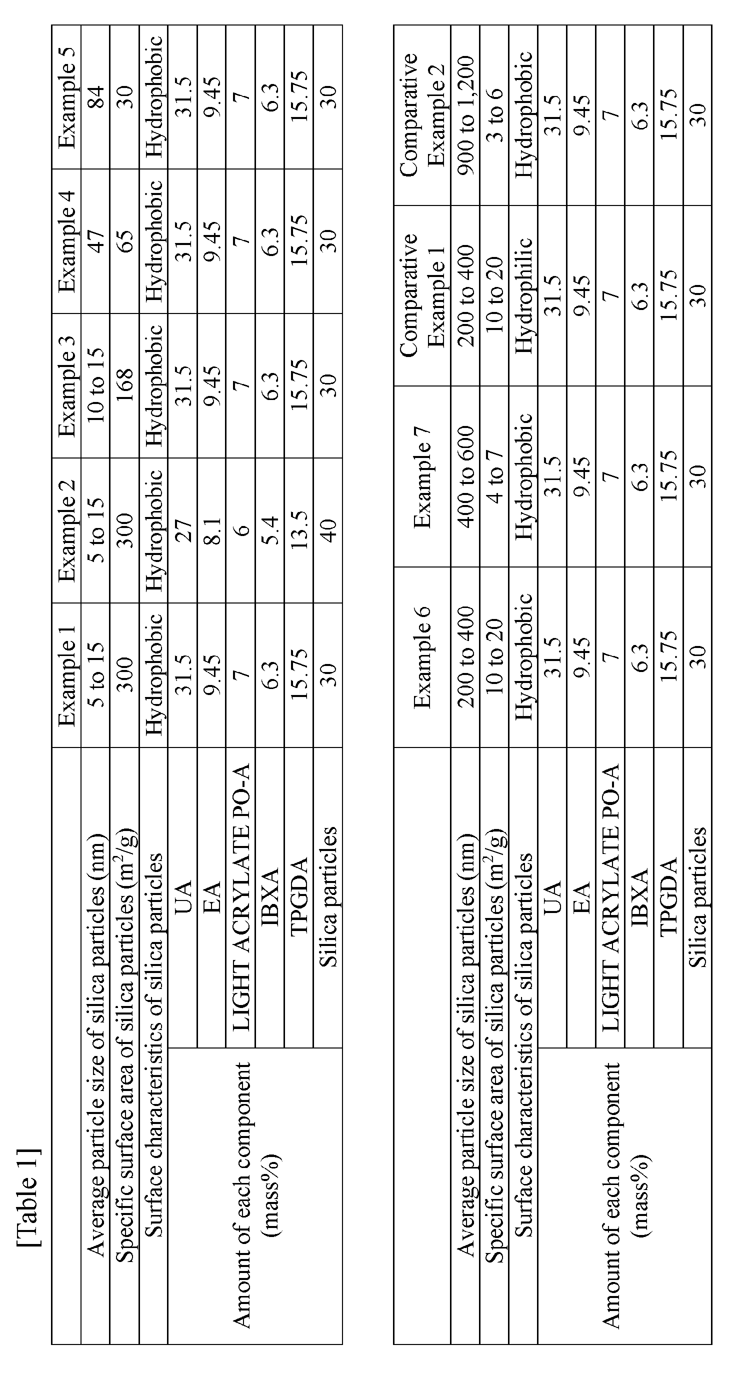

### [Various evaluations]

The following evaluations were carried out using the liquid resin compositions obtained in Examples and Comparative Examples. The results are presented in Table 2.

### (Small angle X-ray scattering measurement)

Each of the resin compositions obtained in Examples or Comparative Examples was injected into a capillary made of borosilicate and having a length of 8 mm and a diameter of 2 mmφ, using a syringe. Then, the opening of the glass capillary was sealed with clay, and this was used as a sample for measurement. X-radiation was caused to enter this sample for measurement vertically with respect to the sample, and X-radiation scattered backward from the sample at a minute angle (small angle) of 5° or less with respect to the incident X-radiation was measured with a two-dimensional detector. With the two-dimensional detector, a scattering pattern scattered in the 360°-direction was acquired.

Meanwhile, for a region where the particle size of the silica particles was small (approximately less than 50 nm), a scattering pattern was acquired mainly using beam line "BL8S3" of Aichi Synchrotron Radiation Center, and for a region where the particle size was large (approximately 50 nm or more), a scattering pattern was acquired using beam line "BL8S3" of Aichi Synchrotron Radiation Center and beam line "BL19B2" of SPring-8. The respective experiment conditions were set as follows.

"BL8S3": X-ray energy 13.5 keV, camera length 4 m, detector R-AXIS IV++.

"BL19B2": X-ray energy 18 keV, camera length 42 m, detector PILATUS 2M.

The X-ray scattering intensity profiles obtained as described above were analyzed using a particle size-porosity analysis software program, "NANO-Solver, Ver. 3.7" (manufactured by Rigaku Corporation). More specifically, fitting was performed according to a non-linear least square method such that the values of the X-ray scattering intensity thus measured and the X-ray scattering intensity calculated by the analysis software would approach to each other. From the fitting results, the volume average particle size of the inorganic oxide particles and the standardized dispersion of the volume average particle size were calculated. Meanwhile, at the time of the analysis, it was assumed that the inorganic oxide particles were completely spherical in shape.

### (Viscosity)

The viscosity at 45°C of the resin composition was measured using a B type viscometer (Brookfield, "Digital Viscometer DV-II", spindle used: No. 18, speed of rotation: 10 rpm).

### (Young's modulus)

Each of the resin compositions obtained in Examples or Comparative Examples was applied on a polyethylene terephthalate (PET) film using a spin coater, and then the resin composition was cured using an electrodeless UV lamp system ("VPS600 (D valve)" manufactured by Heraeus Holding GmbH) under the conditions of 1,000 ± 100 mJ/cm². Thus, a resin layer having a thickness of 200 ± 20 µm was formed on a PET film. The resin layer was peeled off from the PET film, and a resin film was obtained.

The resin film was punched into the Type 5 dumbbell shape of JIS K 7127, and the sample was pulled using a tensile testing machine under the conditions of 23 ± 2°C and 50 ± 10%RH under the conditions of at a tensile rate of 1 mm/min and a distance between bench marks of 25 mm. Thus, a stress-strain curve was obtained. The Young's modulus was determined by means of a 2.5% secant line. Meanwhile, in a case in which the Young's modulus is measured using a resin film as such, the Young's modulus tends to have a slightly higher value (approximately higher by about 100 MPa) than the Young's modulus of the secondary resin layer formed by the same resin composition.

### (Coatability)

A urethane acrylate oligomer obtainable by reacting a polypropylene glycol having a molecular weight of 4,000, isophorone diisocyanate, hydroxy ethyl acrylate, and methanol was prepared. 75 parts by mass of this urethane acrylate oligomer, 12 parts by mass of nonylphenol EO-modified acrylate, 6 parts by mass of N-vinylcaprolactam, 2 parts by mass of 1,6-hexanediol diacrylate, 1 part by mass of 2,4,6-trimethylbenzoyl diphenylphosphine oxide, and 1 part by mass of 3-mercaptopropyltrimethoxysilane were mixed, and thereby a resin composition for a primary resin layer was obtained.

On the outer periphery of a glass fiber having a diameter of 125 µm, which was composed of a core and a clad, a primary resin layer having a thickness of 35 µm was formed using the resin composition for a primary resin layer. A secondary resin layer having a thickness of 45 µm was further formed on that outer periphery using each of the resin compositions of Examples or Comparative Examples, and thereby an optical fiber was produced. The linear velocity was adjusted to 1,500 m/min.

The coatability of the resin composition was evaluated by checking the presence or absence of short circuiting of the optical fiber thus produced. A case in which there was no short circuit was rated as "A", and a case in which short circuit was recognized was rated as "B".

**[Table 2]**

| | Example 1 | Example 2 | Example 3 | Example 4 | Example 5 |
|---|---|---|---|---|---|
| Volume average particle size (nm) | 14 | 13 | 18 | 62 | 140 |
| Standardized dispersion (%) | 35 | 32 | 32 | 19 | 7 |
| Viscosity (mPa·s) | 2,000 | 3,500 | 1,100 | 900 | 800 |
| Young's modulus (film) (MPa) | 2,000 | 2,300 | 1,900 | 1,800 | 1,750 |
| Coatability | A | A | A | A | A |

| | Example 6 | Example 7 | Comparative Example 1 | Comparative Example 2 |
|---|---|---|---|---|
| Volume average particle size (nm) | 420 | 700 | 750 | 900 |
| Standardized dispersion (%) | 52 | 55 | 67 | 50 |
| Viscosity (mPa·s) | 700 | 500 | 2,100 | 400 |
| Young's modulus (film) (MPa) | 1,600 | 1,500 | 1,600 | 1,300 |
| Coatability | A | A | B | A |

It could be verified that the resin compositions of Examples can realize high Young's modulus that is required from a secondary resin layer and also have excellent coatability.

### Reference Signs List

10: optical fiber, 11: core, 12: clad, 13: glass fiber, 14: primary resin layer, 15: secondary resin layer, 16: coating resin layer.

## Claims

1. A resin composition for optical fiber coating,
the resin composition comprising a base resin containing a urethane (meth)acrylate oligomer, a monomer, and a photopolymerization initiator; and inorganic oxide particles,
wherein a volume average particle size of the inorganic oxide particles as measured by a small angle X-ray scattering method is 800 nm or less, and a standardized dispersion of the volume average particle size is 60% or less.

2. The resin composition according to claim 1, wherein the inorganic oxide particles are particles including at least one selected from the group consisting of silicon dioxide, zirconium dioxide, aluminum oxide, magnesium oxide, titanium oxide, tin oxide, and zinc oxide.

3. The resin composition according to claim 1 or 2, wherein a content of the inorganic oxide particles is from 5% by mass to 60% by mass based on a total amount of the resin composition.

4. The resin composition according to any one of claims 1 to 3, wherein the inorganic oxide particles are hydrophobic.

5. The resin composition according to any one of claims 1 to 4, wherein a viscosity at 45°C is 3,500 mPa·s or less.
